# FASCICULE DE BREVET EUROPEEN

(11) **EP 1 851 772 B1**
(45) Date de publication et mention de la délivrance du brevet: **16.07.2008**
(21) Numéro de dépôt: 06726188.3
(22) Date de dépôt: 20.02.2006
(51) Int. Cl.: G21C 19/46, C08G 63/68

(54) **COLMATAGE DE FISSURES SUR DES DISPOSITIFS METALLIQUES DESTINES A CONTENIR DES MATIERES ACIDES ET RADIOACTIVES**
ABDICHTUNG VON RISSEN AUF METALLVORRICHTUNGEN ALS BEHÄLTER FÜR SAURE UND RADIOAKTIVE MATERIALIEN
FILLING CRACKS ON METAL DEVICES DESIGNED TO CONTAIN ACIDIC AND RADIOACTIVE MATERIALS

(30) Priorité: 21.02.2005 FR 0550464
(43) Date de publication de la demande: 07.11.2007
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: DESCARSIN, David, F-37510 Ballan Mire (FR); RABY, Jacques, F-38000 Grenoble (FR); ROBIN, Raphaël, F-94260 Fresnes (FR); VITTOZ, Christelle, F-50340 Sotteville (FR)
(74) Mandataire: Poulin, Gérard
(86) Numéro de dépôt international: PCT/FR2006/050150
(87) Numéro de publication internationale: WO 2006/087501

(56) Documents cités:
- EP-A- 0 136 263
- US-A- 4 367 201
- PATENT ABSTRACTS OF JAPAN vol. 015, no. 317 (C-0858), 13 août 1991 (1991-08-13) & JP 03 121172 A (ARAKAWA CHEM IND CO LTD), 23 mai 1991 (1991-05-23)
- PATENT ABSTRACTS OF JAPAN vol. 003, no. 014 (C-036), 8 février 1979 (1979-02-08) & JP 53 140384 A (MATSUSHITA ELECTRIC WORKS LTD), 7 décembre 1978 (1978-12-07)

## Description

### DOMAINE TECHNIQUE

L'invention se rapporte au colmatage de fissures sur des dispositifs métalliques destinés à contenir des matières acides et radioactives.

Plus précisément, elle se rapporte à l'utilisation d'une composition à base d'une résine polyester chlorée pour colmater des fissures localisées dans la paroi de dispositifs métalliques destinés à contenir des matières acides et radioactives.

L'invention trouve notamment application dans le domaine de la maintenance des équipements métalliques des installations nucléaires, et en particulier des équipements utilisés dans le retraitement des combustibles nucléaires irradiés.

### ÉTAT DE LA TECHNIQUE ANTÉRIEURE

Dans les installations de retraitement des combustibles nucléaires irradiés, de nombreux dispositifs métalliques sont appelés à véhiculer ou à stocker de façon temporaire des matières chargées en acide nitrique et en éléments radioactifs.

Actuellement, le colmatage provisoire des fissures affectant ces équipements est réalisé en appliquant, sur la surface externe des zones fissurées, un masque élastomérique puis une plaque d'un matériau fluorocarboné de type fluoroélastomère.

Or, il s'avère que les revêtements obtenus par ce mode de colmatage ne sont pas satisfaisants en termes de résistance aux attaques acides.

Les Inventeurs se sont donc fixés pour but de trouver une composition qui soit apte à former, sur la surface d'un substrat métallique, un revêtement étanche aux liquides et présentant des propriétés remarquables à la fois d'adhérence vis-à-vis du substrat, de tenue aux acides, y compris à des températures relativement élevées, et de tenue aux irradiations radioactives, notamment au rayonnement γ, de sorte à être parfaitement adaptée au colmatage de fissures localisées dans la paroi de dispositifs métalliques destinés à contenir des matières radioactives à forte teneur en acide nitrique.

Les Inventeurs se sont de plus fixés pour but que cette composition convienne aussi bien au colmatage de fissures localisées dans des parois verticales qu'à celui de fissures affectant des parois horizontales, et puisse être aisément mise en oeuvre, en particulier par des procédés automatisables.

Les Inventeurs se sont encore fixés pour but que cette composition présente une durée de vie en pot (ou "pot-life" en langue anglaise) suffisamment longue pour que son utilisation en tant que matériau de colmatage de fissures ait un coût acceptable.

### EXPOSÉ DE L'INVENTION

Ces buts, et d'autres encore, sont atteints par l'invention qui propose l'utilisation d'une composition comprenant une résine polyester dans laquelle le polyester répond à la formule (I) ci-après : 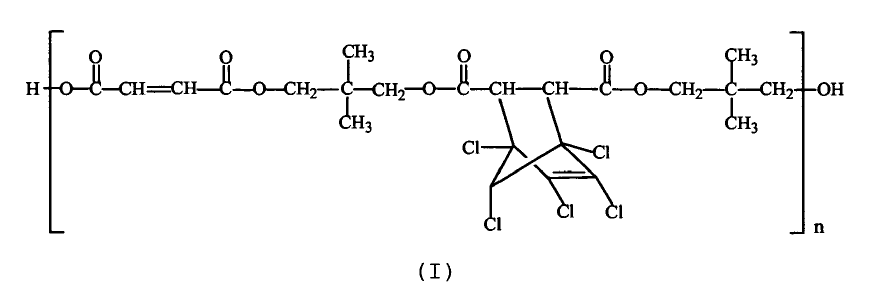 ainsi qu'un catalyseur de réticulation et un accélérateur de réticulation, pour colmater une fissure affectant la paroi d'un dispositif métallique destiné à contenir une matière acide et radioactive.

L'application d'une telle composition en une ou plusieurs couches sur la surface d'un substrat métallique tel qu'un substrat en acier inoxydable ou en zirconium permet, en effet, d'obtenir, après séchage de cette ou de ces couches, des revêtements étanches aux liquides, adhérents au substrat et résistants à la fois aux attaques acides et aux irradiations radioactives, en particulier au rayonnement γ.

Une résine polyester telle que définie ci-avant est notamment disponible auprès de la société ASHLAND CHEMICAL sous deux formes différentes : une forme liquide, prête à l'emploi, qui est dénommée HETRON^{®} 197 et dans laquelle le polyester de formule (I) est déjà dilué dans un solvant réactif, en l'espèce du styrène, et une forme solide, particulaire, qui est dénommée HETRON^{®} 197G et qui nécessite d'être dissoute dans un solvant réactif avant emploi.

Dans le cadre de l'invention, l'une ou l'autre de ces formes peut être utilisée, la forme liquide étant toutefois préférée dans la mesure où elle permet d'économiser une opération de dissolution du polyester. Néanmoins, il va de soi qu'il est également possible d'utiliser la forme solide en la dissolvant préalablement dans un solvant adapté, par exemple du styrène ou un dérivé de celui-ci.

Quoi qu'il en soit, il s'avère que cette résine présente, à l'état liquide, un pot-life relativement court. Aussi est-il préférable, dans le cadre de son utilisation en tant que matériau de base d'une composition de colmatage, d'augmenter son pot-life, ce qui peut notamment être obtenu en jouant sur, d'une part, le choix du catalyseur et de l'accélérateur de réticulation, et, d'autre part, sur les quantités dans lesquelles ces deux composés sont ajoutés à la résine.

De ce fait, le catalyseur de réticulation est, de préférence, le perbenzoate de tert-butyle et représente avantageusement de 0,1 à 2% en masse de la masse totale de la composition, tandis que l'accélérateur de réticulation est, de préférence, un mélange d'octoate de cobalt et de N,N-diméthylaniline, en particulier une solution à 1 à 20% d'octoate de cobalt et de N,N-diméthylaniline dans du phtalate, et représente avantageusement de 0,1 à 5% en masse de la masse totale de la composition.

La composition peut aussi comprendre un inhibiteur de réticulation, la présence d'un tel inhibiteur dans la composition permettant, en effet, d'allonger encore le pot-life de la résine.

Cet inhibiteur de réticulation est, de préférence, le 4-*tert*-butylpyrocathécol. Il peut représenter jusqu'à 0,5% en masse de la masse totale de la composition.

Selon l'invention, la composition peut comprendre de plus une ou plusieurs charges de renfort dans le cas où l'on souhaite optimiser la tenue mécanique des revêtements destinés à être réalisés avec cette composition.

Bien que de nombreux types de matériaux soient susceptibles de servir de charges de renfort, on préfère utiliser des matériaux qui présentent eux-mêmes une haute résistance aux acides. C'est la raison pour laquelle la composition comprend, de préférence, des fibres de verre de type ECR comme charge de renfort, ces fibres ayant, en effet, la particularité de présenter une excellente résistance aux attaques acides de par leur très faible teneur en oxydes de métaux alcalins.

Des fibres de verre de type ECR convenant parfaitement bien à la mise en oeuvre de l'invention sont, par exemple, les fibres ECR de 0,5 mm de longueur commercialisées par la société APPLY-CARBON SA.

Qu'elle renferme ou non une ou plusieurs charges de renfort, la composition peut comprendre en outre un agent thixotrope propre à permettre un ajustement de ses propriétés rhéologiques en fonction du type de colmatage que l'on souhaite réaliser.

Ainsi notamment, l'utilisation d'un agent thixotrope peut être utile pour limiter, lorsque la composition est appliquée sur la surface d'une paroi verticale, son écoulement le long de cette paroi, et pour augmenter l'épaisseur de la couche obtenue à chaque application. Ainsi, par exemple, l'addition de silice pyrogénée, à hauteur de 3% en masse de la masse totale de la composition, a permis d'augmenter cette épaisseur d'un facteur 2,5 dans le cas d'une composition dépourvue de charge de renfort et d'un facteur 3 dans le cas d'une composition comprenant des charges de renfort, par rapport à l'épaisseur obtenue avec des compositions similaires mais dépourvues d'agent thixotrope.

L'agent thixotrope peut être n'importe quel composé classiquement utilisé pour modifier les propriétés rhéologiques d'une composition à base de résine polyester comme, par exemple, du talc, de la silice colloïdale, de la silice pyrogénée ou de la bentonite, la silice pyrogénée étant toutefois préférée.

La composition peut comprendre encore d'autres adjuvants comme un agent ignifugeant, par exemple un trioxyde ou pentoxyde d'antimoine, propre à améliorer son comportement au feu - bien que celui-ci soit déjà très satisfaisant -, ou un colorant destiné à lui donner une couleur particulière.

La composition peut être préparée en ajoutant à la résine (déjà dissoute dans le solvant réactif), successivement et dans l'ordre suivant, l'accélérateur de réticulation, l'inhibiteur de réticulation et le catalyseur de réticulation, puis, le cas échéant, la ou les charges de renfort, l'agent thixotrope et les éventuels autres adjuvants, et en procédant, après chaque ajout, à un mélange, avantageusement au moyen d'un mélangeur électrique, par exemple un mélangeur muni d'une ancre métallique à pales plates, de sorte à obtenir une composition la plus homogène possible. Après une mise au repos pendant une dizaine de minutes pour effectuer son dégazage, la composition est prête à être utilisée.

Son utilisation pour colmater une fissure localisée dans la paroi d'un dispositif métallique est extrêmement simple. En effet, ce colmatage comprend l'application d'une ou plusieurs couches de la composition, typiquement de 1 à 3 couches, sur la surface de la zone fissurée de la paroi, voire sur la surface de l'ensemble de la paroi en cas de fissures multiples, puis le séchage de cette couche ou de l'ensemble de ces couches.

Ce séchage peut être réalisé en laissant ladite couche ou l'ensemble desdites couches sécher à température ambiante (20-25°C). Toutefois, il peut également être accéléré par application d'un chauffage léger ou d'une ventilation.

Conformément à l'invention, la couche ou les couches de composition sont, de préférence, appliquées après avoir préparé la surface à traiter afin d'assurer une adhérence optimale de la composition sur cette surface. Cette préparation comprend, par exemple, une ou plusieurs opérations de dégraissage par des solvants organiques, éventuellement complétées par une ou plusieurs opérations de sablage et/ou une ou plusieurs opérations de rinçage à l'eau déminéralisée.

Lorsque plusieurs couches de composition sont appliquées sur la surface à traiter, il est préférable de ne déposer la dernière couche qu'après séchage de la couche ou des couches précédemment déposées sur cette surface. On favorise ainsi l'accrochage de la dernière couche sur les couches sous-jacentes.

Bien que l'on puisse recourir, pour l'application des couches de la composition, à toute technique classiquement utilisée pour revêtir un substrat d'une composition à base de résine, on préfère utiliser un pinceau alimenté par une seringue sous pression ou procéder à une pulvérisation pneumatique.

En effet, l'utilisation d'un pinceau alimenté par une seringue sous pression s'est avérée convenir particulièrement bien au colmatage de fissures localisées dans une paroi ou dans la partie d'une paroi difficile d'accès. Elle permet en outre une bonne pénétration de la composition dans toutes les anfractuosités que comporte la paroi et garantit ainsi une excellente adhérence du revêtement obtenu après durcissement de la composition vis-à-vis de cette paroi.

Quant à la pulvérisation pneumatique, elle s'est avérée convenir particulièrement bien au colmatage de fissures localisées dans une paroi ou dans la partie d'une paroi à accès visuel réduit. Elle présente de plus l'avantage d'être peu onéreuse, facile à mettre en oeuvre et d'être utilisable sur des parois de toutes dimensions.

Ces deux techniques sont applicables à une composition telle que définie ci-avant et ce, qu'elle comprenne ou non une ou plusieurs charges de renfort, la pulvérisation pneumatique nécessitant toutefois d'adapter la viscosité de la composition au pistolet à pulvérisation que l'on souhaite utiliser. Ceci peut facilement être réalisé en augmentant la teneur en solvant réactif de la composition.

En outre, elles présentent l'avantage d'être automatisables.

Si les conditions le permettent, il est également préférable de soumettre, après séchage, la couche ou l'ensemble des couches de composition déposées sur la surface de la zone fissurée de la paroi à un traitement thermique, un tel traitement s'étant, en effet, révélé optimiser la réticulation de la résine et, par voie de conséquence, la tenue aux acides du revêtement résultant. Ce traitement thermique est, de préférence, réalisé dans une enceinte ventilée munie d'un système de chauffage, par exemple une étuve, et consiste à chauffer ladite surface pendant 2 à 3 heures à une température de l'ordre de 80 à 100°C. La montée et la descente en température de l'enceinte sont, de préférence, effectuées très progressivement, par exemple à raison de 2°C par minute.

Pour colmater des fissures traversantes bien localisées, l'invention prévoit d'utiliser, de préférence, la composition en combinaison avec une ou plusieurs couches d'un matériau de renfort.

Dans ce cas, le matériau de renfort est préférentiellement un voile de verre, et notamment un voile de verre de type C qui présente lui-même une excellente tenue aux attaques acides. Ce type de voile est disponible auprès de la société ARNAUD.

Dans ce cas également, le colmatage d'une fissure comprend, de préférence, les étapes suivantes :
a) on applique une première couche de composition sur la surface de la zone fissurée de la paroi,
b) on applique une première couche du matériau de renfort sur cette couche de composition, en appuyant sur la couche de matériau de renfort pour qu'il s'imprègne de la composition,
c) on applique une deuxième couche de matériau de renfort sur la première couche de matériau de renfort,
d) on applique une deuxième couche de composition sur la deuxième couche de matériau de renfort, puis
e) après séchage des première et deuxième couches de composition, on applique une dernière couche de composition.

Aux étapes a), d) et e) et surtout aux étapes d) et e), on applique les couches de composition au moyen d'un pinceau alimenté par une seringue sous pression, la pression susceptible d'être exercée sur le matériau de renfort par un pistolet à pulvérisation risquant, en effet, d'introduire des bulles d'air dans ce matériau qui affecteront ensuite le revêtement obtenu après réticulation de la résine.

Avantageusement, l'étape e) est suivie d'une étape de traitement thermique que l'on effectue dans les mêmes conditions que celles précédemment indiquées.

Selon l'invention, le dispositif métallique peut aussi bien être destiné à véhiculer la matière acide radioactive qu'à la stocker, que ce soit provisoirement ou sur une période de temps prolongée.

En tout état de cause, il s'agit, de préférence, d'un dispositif d'une installation de retraitement de combustibles nucléaires irradiés.

L'invention sera mieux comprise à la lecture du complément de description qui suit et qui se rapporte à des exemples de préparation de compositions utiles selon l'invention, d'utilisation de ces compositions en combinaison avec un matériau de renfort et de démonstration de leurs propriétés.

Il va de soi que ces exemples sont donnés uniquement à titre d'illustration de l'objet de l'invention et n'en constituent en aucune manière une limitation de cet objet.

### EXPOSÉ DÉTAILLÉ DE MODES DE RÉALISATION PARTICULIERS

### Exemple 1 : Composition de colmatage sans charge de renfort, propre à être appliquée au pinceau alimenté par une seringue sous pression

On prépare une composition de colmatage présentant la formulation suivants :

| | |
|---|---|
| Résine HETRON^{®} 197 (ASHLAND CHEMICAL) | 96,8 g |
| Accélérateur CA-12 (ASHLAND CHEMICAL) | 1,0 g |
| Inhibiteur TC 510 (ASHLAND CHEMICAL) | 0,2 g |
| Catalyseur TBPB-HAM1 (ASHLAND CHEMICAL) | 2,0 g |

Pour ce faire, après avoir introduit la résine dans un pot en plastique, on lui ajoute, successivement et dans l'ordre suivant, l'accélérateur, l'inhibiteur et le catalyseur de réticulation en mélangeant, après chaque ajout, pendant 2 minutes au moyen d'un mélangeur électrique muni d'une ancre métallique à pales plates (vitesse de rotation : 300 tours/min) pour obtenir une composition homogène.

La composition ainsi préparée présente un pot-life d'environ 4 heures à température ambiante (20-25°C).

L'application de cette composition sur la surface de substrats métalliques au moyen d'un pinceau alimenté par une seringue sous pression permet d'obtenir des dépôts uniformes et ne présentant aucun défaut, c'est-à-dire ni bulles ni craquelures, lorsqu'ils sont examinés à la loupe binoculaire.

### Exemple 2 : Composition de colmatage sans charge de renfort, propre à être appliquée par pulvérisation pneumatique

On prépare une composition de colmatage présentant la formulation suivants :

| | |
|---|---|
| Résine HETRON^{®} 197 (ASHLAND CHEMICAL) | 90,0 g |
| Accélérateur CA-12 (ASHLAND CHEMICAL) | 1,0 g |
| Inhibiteur TC 510 (ASHLAND CHEMICAL) | 0,2 g |
| Catalyseur TBPB-HAM1 (ASHLAND CHEMICAL) | 2,0 g |
| Styrène | 7,0 g |

en procédant comme dans l'exemple 1 ci-avant, à ceci près que l'on dilue la résine avec le styrène avant de lui ajouter l'accélérateur, l'inhibiteur et le catalyseur de réticulation.

On obtient ainsi une composition fluide, aisément pulvérisable avec un pistolet pneumatique et dont le pot-life est d'environ 4 heures à température ambiante (20-25°C).

Cette composition, appliquée sur la surface de substrats métalliques par pulvérisation pneumatique, conduit à des dépôts homogènes, d'épaisseur constante et exempts de défauts visibles.

### Exemple 3 : Composition de colmatage sans charge de renfort, propre à être appliquée par pulvérisation pneumatique

On prépare une composition de colmatage présentant la formulation suivants :

| | |
|---|---|
| Résine HETRON^{®} 197 (ASHLAND CHEMICAL) | 95,0 g |
| Accélérateur CA-12 (ASHLAND CHEMICAL) | 3,0 g |
| Catalyseur TBPB-HAM1 (ASHLAND CHEMICAL) | 2,0 g |

Pour ce faire, après avoir introduit la résine dans un pot en plastique, on lui ajoute l'accélérateur, puis après homogénéisation, le catalyseur de réticulation. Une homogénéisation est alors effectuée pendant environ 10 minutes.

La composition ainsi préparée présente un pot-life d'environ 1 heure à température ambiante (20-25°C) et de 12 heures à 5°C.

Elle est donc conservée à 5°C avant projection.

Cette composition, appliquée sur la surface de substrats métalliques au moyen d'un pistolet pneumatique muni d'un réservoir sous pression (par exemple, en appliquant une pression de 5 bars au réservoir et une pression de 2 bars au niveau de la buse) permet d'obtenir des dépôts homogènes, d'épaisseur constante et exempts de défauts visibles.

### Exemple 4 : Composition de colmatage renfermant une charge de renfort, propre a être appliquée au pinceau alimenté par une seringue sous pression

On prépare une composition de colmatage présentant la formulation suivante :

| | |
|---|---|
| Résine HETRON^{®} 197 (ASHLAND CHEMICAL) | 74,5 g |
| Accélérateur CA-12 (ASHLAND CHEMICAL) | 1,0 g |
| Inhibiteur TC 510 (ASHLAND CHEMICAL) | 0,1 g |
| Catalyseur TBPB-HAM1 (ASHLAND CHEMICAL) | 1,4 g |
| Fibres de verre ECR 0,5 mm (APPLY-CARBON SA) | 20,0 g |
| Silice pyrogénée R812 (DEGUSSA) | 3,0 g |

Pour ce faire, on introduit la résine dans un pot en plastique et on lui ajoute successivement l'accélérateur, l'inhibiteur et le catalyseur de réticulation comme décrit dans l'exemple 1 ci-avant.

Puis, on incorpore les fibres de verre dans le mélange résultant et on mélange l'ensemble pendant 11 minutes à l'aide du mélangeur électrique (vitesse de rotation : 300 tours/min). On ajoute alors la silice pyrogénée et on procède à un nouveau mélange de 10 minutes (vitesse de rotation : 300 tours/min).

La composition ainsi préparée présente un pot-life d'environ 4 heures à température ambiante (20-25°C).

Son application sur la surface de substrats métalliques au moyen d'un pinceau alimenté par une seringue sous pression permet d'obtenir des dépôts uniformes et exempts de défauts visibles.

### Exemple 5 : Composition de colmatage renfermant une charge de renfort, propre a être appliquée au pinceau alimenté par une seringue sous pression

On prépare une composition de colmatage présentant la formulation suivants :

| | |
|---|---|
| Résine HETRON^{®} 197 (ASHLAND CHEMICAL) | 95,0 g |
| Accélérateur CA-12 (ASHLAND CHEMICAL) | 3,0 g |
| Catalyseur TBPB-HAM1 (ASHLAND CHEMICAL) | 2,0 g |
| Fibres de verre | 0,8 g |

Les fibres de verre sont introduites par pincées dans la résine. Après homogénéisation, l'accélérateur et le catalyseur de réticulation sont ajoutés au mélange résine/fibres de verre en procédant comme dans l'exemple 3 ci-avant.

La composition ainsi obtenue est conservée à 5°C le temps de la préparation de l'intervention.

Son application sur la surface de substrats métalliques, notamment verticaux, au moyen d'un pinceau alimenté par une seringue sous pression permet, là également, d'obtenir des dépôts uniformes et exempts de défauts visibles.

### Exemple 6 : Utilisation d'une composition de colmatage en combinaison avec un matériau de renfort

On colmate les fissures d'un substrat en procédant de la manière suivants :
- on applique une première couche d'une composition de colmatage identique à celle préparée dans l'exemple 1 ci-avant sur la surface des zones fissurées de ce substrat à l'aide d'un pinceau alimenté par une seringue sous pression,
- on applique sur cette couche un premier pli d'un voile de verre de type C (SAINT-GOBAIN VETROTEX) en appuyant sur ce voile pour y faire pénétrer la composition tout en veillant à ne pas créer de bulles,
- on applique sur ce premier pli un deuxième pli de voile de verre de type C,
- on applique sur ce deuxième pli une deuxième couche de composition de colmatage, puis
- après 24 heures de séchage à température ambiante (20-25°C), on recouvre le tout d'une dernière couche de composition de colmatage.

On place le substrat dans une étuve ventilée dont on porte la température à 100°C, à raison de 2°C par minute. On maintient cette température pendant 3 heures puis on rabaisse la température de l'enceinte, à raison de 2°C par minute, jusqu'à revenir à la température ambiante.

### Exemple 7 : Mise en évidence des propriétés des revêtements obtenus avec les compositions de colmatage

Les propriétés des revêtements obtenus avec les compositions de colmatage telles que préparées dans les exemples ci-avant, et notamment leur tenue au rayonnement γ et leur tenue à l'acide nitrique, ont été mises en évidence par des séries de tests.

Pour la tenue au rayonnement γ, des pièces métalliques fissurées, dont les fissures ont été colmatées avec ces compositions de colmatage, et des éprouvettes de flexion (l*L*e : 80*10*4 mm) usinées dans des plaques préparées à partir de ces mêmes compositions ont été soumises à des irradiations γ (source de cobalt 60) en continu et sous air ambiant.

Ont été utilisées, comme pièces métalliques, des pastilles en acier inoxydable, d'un diamètre de 100 mm, au centre desquelles une fissure traversante a été réalisée par électroérosion.

Avant le colmatage, ces pastilles ont été soumises à un traitement de surface destiné à assurer une adhérence optimale des compositions de colmatage et comprenant :
- un premier dégraissage à l'acétone,
- un sablage pendant 2 à 3 minutes (grains de corindon fin à 3 kg/cm² de pression),
- un second dégraissage à l'acétone,
- un troisième dégraissage au trichloroéthylène, et
- deux rinçages à l'eau déminéralisée.

Les éprouvettes de flexion ont, elles, été réalisées selon la norme NF EN ISO 178 : une plaque a été préparée puis les éprouvettes ont été usinées conformément à la norme ISO 2818.

Les effets des irradiations γ sur les revêtements de colmatage des pièces métalliques d'une part, et sur les éprouvettes de flexion d'autre part, ont été appréciés en soumettant celles-ci à des mesures bidimensionnelles et des examens à la loupe binoculaire avant et après irradiation et en comparant les résultats obtenus. Les éprouvettes de flexion ont été, de plus, soumises à des essais de flexion 3 points selon la norme NF EN ISO 178.

En l'espèce, les mesures bidimensionnelles et les examens à la loupe binoculaire n'ont fait apparaître aucune variation sensible des dimensions, ni de l'aspect des revêtements de colmatage des pièces métalliques après irradiation et ce, quelle que soit la composition de colmatage utilisée. Il en est de même pour les éprouvettes de flexion.

Quant aux essais de flexion, ils ont montré que, si les irradiations γ n'ont pas d'effet notable sur le module de flexion des éprouvettes, elles induisent, par contre, une augmentation significative de la contrainte à la rupture en flexion dans le domaine testé.

A titre d'exemple, le tableau 1 ci-après présente les résultats des essais de flexion réalisés, avant et après irradiation (dose intégrée de 10⁵ Gy), sur neuf éprouvettes provenant d'une plaque réalisée avec la composition de colmatage préparée dans l'exemple 1 ci-avant.

**TABLEAU 1**

| Eprouvette | Module de flexion (GPa) | | Contrainte à la rupture en flexion (MPa) | | Déformation à la rupture | |
|---|---|---|---|---|---|---|
| | Avant Irrad. | Après Irrad. | Avant Irrad. | Après Irrad. | Avant Irrad. | Après Irrad. |
| 1 | 3,53 | 3,59 | 79,97 | 101,13 | 0,0239 | 0,0318 |
| 2 | 3,60 | 3,64 | 79,07 | 87,13 | 0,0236 | 0,0266 |
| 3 | 3,53 | 3,60 | 97,00 | 93,95 | 0,0299 | 0,0289 |
| 4 | 3,61 | 3,60 | 87,21 | 99,23 | 0,0261 | 0,0314 |
| 5 | 3,63 | 3,67 | 82,52 | 84,29 | 0,0246 | 0,0253 |
| 6 | 3,58 | 3,69 | 77,04 | 80,13 | 0,0232 | 0,0240 |
| 7 | 3,55 | 3,62 | 80,14 | 86,29 | 0,0240 | 0,0265 |
| 8 | 3,55 | 3,62 | 81,02 | 98,35 | 0,0243 | 0,0306 |
| 9 | 3,52 | 3,64 | 77,61 | 96,37 | 0,0233 | 0,0301 |

Ainsi, il s'avère que les propriétés mécaniques des revêtements obtenus avec les compositions de colmatage utiles selon l'invention ne sont pas dégradées par le rayonnement γ et qu'elles sont mêmes renforcées par ce rayonnement dans le domaine testé.

Pour la tenue à l'acide nitrique, les pièces métalliques ont été fixées, après avoir été soumises aux irradiations γ, sur des réacteurs en verre renfermant un milieu liquide nitrique (6N) au moyen de brides de serrage de sorte à ce que seule la face des pièces portant le revêtement de colmatage soit au contact de ce milieu. L'étanchéité entre les pièces métalliques et les réacteurs étant assurée par des joints toriques VITON^{®} revêtus de polytétrafluoroéthylène, un passage du milieu nitrique vers l'extérieur des réacteurs ne pouvait donc se faire que par les fissures colmatées des pièces métalliques.

L'étanchéité des revêtements de colmatage et leur tenue à l'acide nitrique ont été appréciées par un suivi régulier sur plusieurs mois des pièces métalliques et par des expertises en fin de tests.

Le suivi régulier a consisté à détecter une éventuelle fuite au niveau des fissures au moyen d'un papier pH. Pour ce faire, le papier pH a été frotté sur les revêtements de colmatage, une coloration rouge du papier indiquant clairement l'existence d'une fuite au travers des fissures, synonyme d'une rupture d'étanchéité.

Les expertises ont, elles, consisté à peser les pièces métalliques après rinçage à l'eau et séchage à l'étuve, à apprécier visuellement l'évolution des revêtements de colmatage par des macrographies ainsi que les éventuelles pertes d'adhérence de ces revêtements à l'interface par des métallographies sur coupe, perpendiculairement aux fissures.

Le suivi régulier au papier pH n'a pas permis de détecter de fuite du milieu nitrique au travers des fissures. Aucune perte d'étanchéité n'a donc été constatée.

Les modifications des revêtements se sont limitées à un changement de leur coloration, lequel est vraisemblablement dû à un vieillissement naturel à l'air dans les conditions de tests.

Les pertes de masse se sont révélées faibles pour l'ensemble des pièces métalliques testées et relativement équivalentes les unes aux autres (inférieures à 0,5%), ce qui dénote là encore une très bonne tenue des revêtements à l'acide nitrique.

Les métallographies n'ont montré aucun signe lié à une éventuelle migration d'acide autour des fissures sur la face des revêtements opposée à celle en contact avec le milieu nitrique. Pour l'ensemble des pièces, à l'interface revêtement/acier, aucun signe de retrait n'a été observé, ce qui confirme que l'adhérence des revêtements sur des substrats métalliques n'est pas altérée par la présence d'acide nitrique.

## Revendications

1. Utilisation d'une composition comprenant une résine polyester chlorée dans laquelle le polyester répond à la formule (I) ci-après : 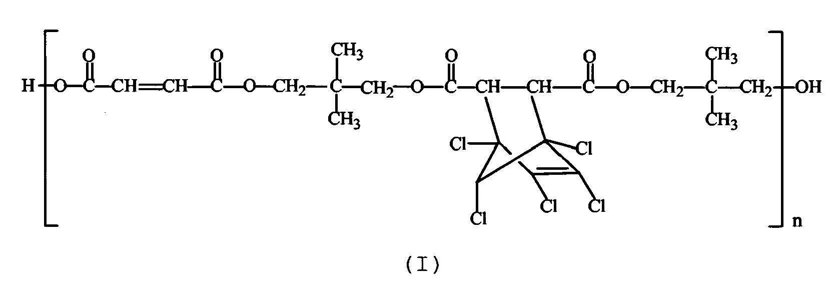 ainsi qu'un catalyseur de réticulation et un accélérateur de réticulation, pour colmater une fissure affectant la paroi d'un dispositif métallique destiné à contenir une matière acide et radioactive.

2. Utilisation selon la revendication 1, dans laquelle le catalyseur de réticulation est le perbenzoate de *tert*-butyle.

3. Utilisation selon la revendication 1 ou la revendication 2, dans laquelle le catalyseur de réticulation représente de 0,1 à 2% en masse de la masse totale de ladite composition.

4. Utilisation selon l'une quelconque des revendications précédentes, dans laquelle l'accélérateur de réticulation est un mélange d'octoate de cobalt et de N,N-diméthylaniline, en particulier une solution à 1 à 20% d'octoate de cobalt et de N,N-diméthylaniline dans du phtalate.

5. Utilisation selon l'une quelconque des revendications précédentes, dans laquelle l'accélérateur de réticulation représente de 0,1 à 5% en masse de la masse totale de ladite composition.

6. Utilisation selon l'une quelconque des revendications précédentes, dans laquelle la composition comprend de plus un inhibiteur de réticulation.

7. Utilisation selon la revendication 6, dans laquelle l'inhibiteur de réticulation est le 4-tert-butylpyrocathécol et représente jusqu'à 0,5% en masse de la masse totale de la composition.

8. Utilisation selon l'une quelconque des revendications précédentes, dans laquelle la composition comprend de plus une ou plusieurs charges de renfort.

9. Utilisation selon la revendication 8, dans laquelle la composition comprend des fibres de verre de type ECR.

10. Utilisation selon l'une quelconque des revendications précédentes, dans laquelle la composition comprend en outre un agent thixotrope.

11. Utilisation selon la revendication 10, dans laquelle l'agent thixotrope est de la silice pyrogénée.

12. Utilisation selon l'une quelconque des revendications précédentes, dans laquelle le colmatage de la fissure comprend l'application d'une ou de plusieurs couches de composition sur la surface de la zone fissurée de la paroi, puis le séchage de cette couche ou de l'ensemble de ces couches.

13. Utilisation selon la revendication 12, dans laquelle l'application de la couche ou des couches de composition est réalisée au moyen d'un pinceau alimenté par une seringue sous pression, ou par pulvérisation pneumatique.

14. Utilisation selon la revendication 12 ou la revendication 13, dans laquelle le colmatage de la fissure comprend de plus le chauffage de la couche ou de l'ensemble des couches de composition déposées sur la surface de la zone fissurée de la paroi pendant 2 à 3 heures à une température de l'ordre de 80 à 100°C.

15. Utilisation selon l'une quelconque des revendications 1 à 11, dans laquelle la composition est utilisée en combinaison avec une ou plusieurs couches d'un matériau de renfort.

16. Utilisation selon la revendication 15, dans laquelle le matériau de renfort est un voile de verre, en particulier un voile de verre de type C.

17. Utilisation selon la revendication 15 ou la revendication 16, dans laquelle le colmatage de la fissure est réalisé de la manière suivante :
a) on applique une première couche de composition sur la surface de la zone fissurée de la paroi,
b) on applique une première couche du matériau de renfort sur cette couche de composition, en appuyant sur la couche de matériau de renfort pour qu'il s'imprègne de la composition,
c) on applique une deuxième couche de matériau de renfort sur la première couche de matériau de renfort,
d) on applique une deuxième couche de composition sur la deuxième couche de matériau de renfort, puis
e) après séchage des première et deuxième couches de composition, on applique une dernière couche de composition.

18. Utilisation selon la revendication 17, dans laquelle l'application des couches de composition est réalisée au moyen d'un pinceau alimenté par une seringue sous pression.

19. Utilisation selon la revendication 17 ou la revendication 18, dans laquelle le colmatage de la fissure comprend, postérieurement à l'étape e), le chauffage des couches de composition déposées sur la zone fissurée de la paroi pendant 2 à 3 heures à une température de l'ordre de 80 à 100°C.

20. Utilisation selon l'une quelconque des revendications précédentes, dans laquelle le dispositif métallique est destiné à véhiculer la matière acide et radioactive.

21. Utilisation selon l'une quelconque des revendications précédentes, dans laquelle le dispositif métallique est destiné à stocker, temporairement ou de façon prolongée, la matière acide et radioactive.

22. Utilisation selon l'une quelconque des revendications précédentes, dans laquelle le dispositif métallique est un dispositif d'une installation de retraitement de combustibles nucléaires irradiés.

## Claims

1. Use of a composition comprising a chlorinated polyester resin in which the polyester satisfies formula (I) below: 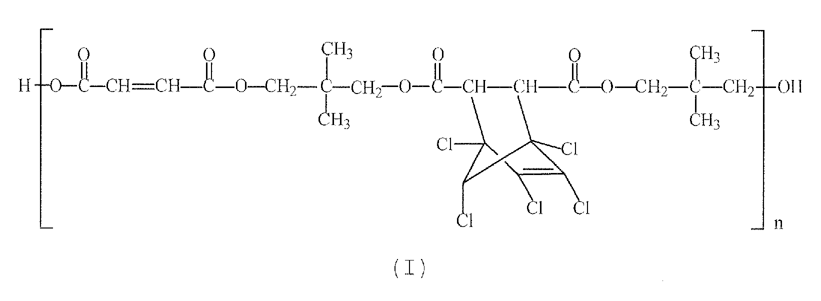 together with a crosslinking catalyst and a crosslinking accelerator in order to plug a crack affecting the wall of a metal device intended to contain a radioactive acid material.

2. Use according to Claim 1, in which the crosslinking catalyst is *tert*-butyl perbenzoate.

3. Use according to Claim 1 or Claim 2, in which the crosslinking catalyst represents from 0.1 to 2% by weight of the total weight of said composition.

4. Use according to any one of the preceding claims, in which the crosslinking accelerator is a mixture of cobalt octoate and N,N-dimethylaniline, in particular a 1 to 20% cobalt octoate and N,N-dimethylaniline solution in a phthalate.

5. Use according to any one of the preceding claims, in which the crosslinking accelerator represents from 0.1 to 5% by weight of the total weight of said composition.

6. Use according to any one of the preceding claims, in which the composition also includes a crosslinking inhibitor.

7. Use according to Claim 6, in which the crosslinking inhibitor is 4-*tert*-butylpyrocathecol and represents up to 0.5% by weight of the total weight of the composition.

8. Use according to any one of the preceding claims, in which the composition also includes one or more reinforcing fillers.

9. Use according to Claim 8, in which the composition includes ECR-type glass fibres.

10. Use according to any one of the preceding claims, in which the composition furthermore includes a thixotropic agent.

11. Use according to Claim 10, in which the thixotropic agent is pyrogenic silica.

12. Use according to any one of the preceding claims, in which the operation of plugging the crack comprises the application of one or more layers of composition on the surface of the cracked region of the wall followed by the drying of this layer or all of these layers.

13. Use according to Claim 12, in which the layer or layers of composition are applied by means of a brush supplied from a pressurized syringe, or by air spraying.

14. Use according to Claim 12 or Claim 13, in which the operation of plugging the crack additionally includes heating the layer or all of the layers of composition deposited on the surface of the cracked region of the wall for 2 to 3 hours at a temperature of around 80 to 100°C.

15. Use according to any one of Claims 1 to 11, in which the composition is used in combination with one or more layers of a reinforcing material.

16. Use according to Claim 15, in which the reinforcing material is a glass veil, in particular a type-C glass veil.

17. Use according to Claim 15 or Claim 16, in which the operation of plugging the crack is carried out in the following manner:
a) a first layer of composition is applied on the surface of the cracked region of the wall;
b) a first layer of reinforcing material is applied on this layer of composition, by pressing on the layer of reinforcing material in order for it to be impregnated with the composition;
c) a second layer of reinforcing material is applied on the first layer of reinforcing material;
d) a second layer of composition is applied on the second layer of reinforcing material; and then
e) after the first and second layers of composition have been dried, a final layer of composition is applied.

18. Use according to Claim 17, in which the layers of composition are applied by means of a brush supplied from a pressurized syringe.

19. Use according to Claim 17 or Claim 18, in which the operation of plugging the crack includes, after step e), heating the layers of composition deposited on the cracked region of the wall for 2 to 3 hours at a temperature of around 80 to 100°C.

20. Use according to any one of the preceding claims, in which the metal device is intended for conveying the radioactive acid material.

21. Use according to any one of the preceding claims, in which the metal device is intended to store, temporarily or for a prolonged time, the radioactive acid material.

22. Use according to any one of the preceding claims, in which the metal device is a device of an reprocessing installation irradiated nuclear fuel.

## Patentansprüche

1. Verwendung einer Zusammensetzung umfassend ein chloriertes Polyesterharz, wobei der Polyester der nachstehenden Formel (I) entspricht 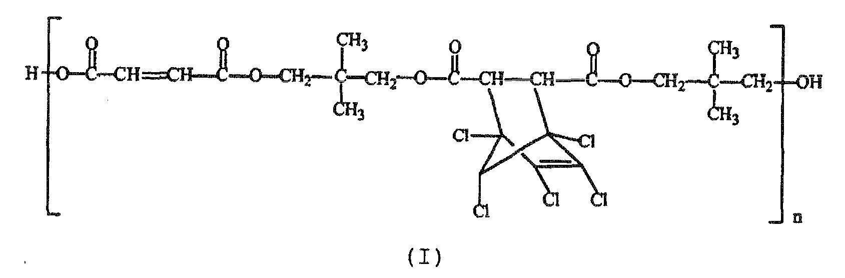 sowie einen Vernetzungskatalysator und einen Vernetzungsbeschleuniger zum Abdichten eines Risses, der die Wand einer Vorrichtung aus Metall betrifft, die dazu bestimmt ist, ein saures und radioaktives Material zu enthalten.

2. Verwendung gemäß Anspruch 1, wobei der Vernetzungskatalysator tert-Butylperbenzoat ist.

3. Verwendung gemäß Anspruch 1 oder Anspruch 2, wobei der Vernetzungskatalysator 0,1 bis 2 Gew.-% des Gesamtgewichts der Zusammensetzung darstellt.

4. Verwendung gemäß einem der vorangehenden Ansprüche, wobei der Vernetzungsbeschleuniger ein Gemisch aus Cobaltoctoat und N,N-Dimethylanilin, insbesondere eine Lösung von 1 bis 20 % Cobaltoctoat und N,N-Dimethylanilin in Phthalat ist.

5. Verwendung gemäß einem der vorangehenden Ansprüche, wobei der Vernetzungsbeschleuniger 0,1 bis 5 Gew.-% des Gesamtgewichts der Zusammensetzung darstellt.

6. Verwendung gemäß einem der vorangehenden Ansprüche, wobei die Zusammensetzung außerdem einen Vernetzungshemmer enthält.

7. Verwendung gemäß Anspruch 6, wobei der Vernetzungshemmer 4-teri-Butylbrenzcatechin ist und bis zu 0,5 Gew.-% des Gesamtgewichts der Zusammensetzung darstellt.

8. Verwendung gemäß einem der vorangehenden Ansprüche, wobei die Zusammensetzung außerdem einen oder mehrere Verstärkungsfüllstoffe umfasst.

9. Verwendung gemäß Anspruch 8, wobei die Zusammensetzung Glasfasern des Typs ECR umfasst.

10. Verwendung gemäß einem der vorangehenden Ansprüche, wobei die Zusammensetzung außerdem ein Thixotropiemittel umfasst.

11. Verwendung gemäß Anspruch 10, wobei das Thixotropiemittel pyrogenes Siliziumoxid ist.

12. Verwendung gemäß einem der vorangehenden Ansprüche, wobei das Abdichten des Risses das Aufbringen einer oder mehrerer Schichten der Zusammensetzung auf die Oberfläche der Risszone der Wand und darauf die Trocknung dieser Schicht oder der Gesamtheit dieser Schichten umfasst.

13. Verwendung gemäß Anspruch 12, wobei das Aufbringen der Schicht oder der Schichten der Zusammensetzung mittels eines durch eine Druckspritze beschickten Pinsels oder durch Druckluftzerstäubung durchgeführt wird.

14. Verwendung gemäß Anspruch 12 oder Anspruch 13, wobei das Abdichten des Risses außerdem das Erhitzen der auf die Oberfläche der Risszone der Wand aufgetragenen Schicht oder der Gesamtheit der Schichten der Zusammensetzung während 2 bis 3 Stunden auf eine Temperatur in der Größenordnung von 80 bis 100 °C umfasst.

15. Verwendung gemäß einem der Ansprüche 1 bis 11, wobei die Zusammensetzung in Kombination mit einer oder mehreren Schichten aus einem Verstärkungsmaterial verwendet wird.

16. Verwendung gemäß Anspruch 15, wobei das Verstärkungsmaterial ein Glasvlies, insbesondere ein Glasvlies des Typs C ist.

17. Verwendung gemäß Anspruch 15 oder Anspruch 16, wobei das Abdichten des Risses auf folgende Weise durchgeführt wird:
a) eine erste Schicht der Zusammensetzung wird auf die Oberfläche der Risszone der Wand aufgebracht,
b) eine erste Schicht des Verstärkungsmaterials wird auf diese Schicht der Zusammensetzung unter Drücken auf die Schicht des Verstärkungsmaterials aufgebracht, damit sie von der Zusammensetzung durchdrungen wird,
c) eine zweite Schicht des Verstärkungsmaterials wird auf die erste Schicht des Verstärkungsmaterials aufgebracht,
d) eine zweite Schicht der Zusammensetzung wird auf die zweite Schicht des Verstärkungsmaterials aufgebracht und dann
e) wird nach Trocknung der ersten und zweiten Schicht der Zusammensetzung eine letzte Schicht der Zusammensetzung aufgebracht.

18. Verwendung gemäß Anspruch 17, wobei das Aufbringen der Schichten der Zusammensetzung mittels eines durch eine Druckspritze beschickten Pinsels durchgeführt wird.

19. Verwendung gemäß Anspruch 17 oder Anspruch 18, wobei das Abdichten des Risses nach dem Schritt e) das Erhitzen der auf die Risszone der Wand aufgetragenen Schichten der Zusammensetzung 2 bis 3 Stunden auf eine Temperatur in der Größenordnung von 80 bis 100 °C umfasst.

20. Verwendung gemäß einem der vorangehenden Ansprüche, wobei die Vorrichtung aus Metall zum Transportieren des sauren und radioaktiven Materials bestimmt ist.

21. Verwendung gemäß einem der vorangehenden Ansprüche, wobei die Vorrichtung aus Metall zum zeitweisen oder längeren Lagern des sauren und radioaktiven Materials bestimmt ist.

22. Verwendung gemäß einem der vorangehenden Ansprüche, wobei die Vorrichtung aus Metall eine Vorrichtung eine Anlage zur Wiederaufbereitung bestrahlten Kernbrennstoffs ist.
